# EUROPEAN PATENT APPLICATION

(11) **EP 4 286 110 A1**
(43) Date of publication of application: **06.12.2023**
(21) Application number: 21931753.4
(22) Date of filing: 20.12.2021
(51) Int. Cl.: B25J 13/02, B25J 19/02, B25J 19/06

(54) **WEARABLE INSTRUMENT**

(30) Priority: 15.03.2021 JP 2021041367
(71) Applicant: OMRON Corporation, Kyoto 600-8530 (JP)
(72) Inventor: HASHIMOTO, Minoru, Kyoto-shi, Kyoto 600-8530 (JP)
(74) Representative: Isarpatent
(86) International application number: PCT/JP2021/047114
(87) International publication number: WO 2022/196011

(57) **Abstract**

A wearable instrument configured to be wearable by a user includes an inertial sensor, a judgment unit configured to judge whether an output value of the inertial sensor meets a predetermined condition, and an output unit configured to output an operation permission signal for instructing a control device configured to control operation of a machine to permit operation of the machine in a case in which the output value meets the predetermined condition.

## Description

### TECHNICAL FIELD

The present invention relates to a wearable instrument.

### BACKGROUND ART

When a worker performs work such as maintenance in a hazardous area, such as inside a fenced-off area, an enabling switch is used to protect a worker from unexpected machine operation. The enabling switch is configured to output an operation permission signal for the machine when gripped to a middle position. Patent Document 1 discloses an enabling switch used in a safety device of equipment such as a teach pendant of a robot or a machine tool.

### CITATION LIST

### PATENT LITERATURE

Patent Literature 1: Japanese Patent No. 4085686

### SUMMARY OF INVENTION

### TECHNICAL PROBLEM

When a worker performs work such as maintenance while using the enabling switch, the worker holds the enabling switch in one hand. As a result, one hand of the worker is always occupied during work, which is a problem.

The present invention has been made in view of the circumstances described above, and an object of the present invention is to provide a technique that enables a user to use both hands while ensuring safety during work.

### SOLUTION TO PROBLEM

A wearable instrument according to the present disclosure is a wearable instrument configured to be wearable by a user, the wearable instrument including an inertial sensor, a judgment unit configured to judge whether an output value of the inertial sensor meets a predetermined condition, and an output unit configured to output an operation permission signal for instructing a control device configured to control operation of a machine to permit operation of the machine in a case in which the output value meets the predetermined condition.

In a case in which the output value of the inertial sensor meets the predetermined condition, the output unit outputs the operation permission signal for instructing the control device to permit operation of the machine. When the operation permission signal is input to the control device from the output unit, the control device continues operation of the machine. For example, in a case in which the user makes a sudden movement to avoid contact or collision with the machine, the output value of the inertial sensor does not meet the predetermined condition and the output unit does not output the operation permission signal to the control device. Thus, in a case in which the output value of the inertial sensor does not meet the predetermined condition, the operation permission signal is no longer input to the control device, and the control device stops operation of the machine. Accordingly, contact or collision between the user and the machine is avoided, and the safety of the user is ensured when the user performs work near the machine. By wearing the wearable instrument, the user does not need to hold the wearable instrument with one or both hands, and the user can use both hands during work. Accordingly, the user can use both hands while ensuring safety during work.

The judgment unit may judge whether the output value meets the predetermined condition by executing one of a plurality of types of judgment algorithms. The wearable instrument according to the present disclosure may include a switching unit configured to switch a state of the output unit to active or inactive. The output unit may output the operation permission signal to the control device in a case in which the state of the output unit is active and the output value meets the predetermined condition.

The output unit does not output the operation permission signal to the control device in a case in which the state of the output unit is inactive. The judgment unit may make a judgment that the user is not wearing the wearable instrument in a case in which the output value does not fluctuate for a predetermined period, and the switching unit may set the state of the output unit to inactive in a case in which the judgment unit makes a judgment that the user is not wearing the wearable instrument.

The wearable instrument according to the present disclosure may further include a vital sensor configured to acquire vital data of the user, the judgment unit may make a judgment that the user is not wearing the wearable instrument in a case in which the vital sensor does not acquire the vital data, and the switching unit may set the state of the output unit to inactive in a case in which the judgment unit makes a judgment that the user is not wearing the wearable instrument. The wearable instrument according to the present disclosure may further include a notification unit configured to issue a notification of first information indicating that the user is wearing the wearable instrument or second information indicating that the user is not wearing the wearable instrument, and the notification unit may issue a notification of the first information in a case in which the judgment unit makes a judgment that the user is wearing the wearable instrument, and issue a notification of the second information in a case in which the judgment unit makes a judgment that the user is not wearing the wearable instrument.

The wearable instrument according to the present disclosure may further include a diagnostic unit configured to make a diagnosis as to whether the inertial sensor is operating normally, and the notification unit may issue a notification of information indicating that the inertial sensor is operating normally in a case in which the diagnostic unit makes a diagnosis that the inertial sensor is operating normally, and issue a notification of information indicating that the inertial sensor is not operating normally in a case in which the diagnostic unit makes a diagnosis that the inertial sensor is not operating normally.

The inertial sensor may be an accelerometer or an angular velocity sensor. The wearable instrument according to the present disclosure may include a plurality of the inertial sensors. At least one of the plurality of inertial sensors may be an accelerometer, and at least one of the plurality of inertial sensors may be an angular velocity sensor.

The predetermined condition may include a condition that the output value is equal to or less than a threshold value or less than the threshold value. The predetermined condition may include a condition that a predetermined calculation is performed on the output value and a calculation value obtained by the predetermined calculation is equal to or less than a threshold value or less than the threshold value. The predetermined condition may include a condition that an amount of change in a current value of the output value with respect to a previous value of the output value is equal to or less than a threshold value or less than the threshold value, or that the amount of change falls within a predetermined range.

The predetermined condition may include a condition that a predetermined calculation is performed on past data and current data of the output value, and a calculation value obtained by the predetermined calculation is equal to or less than a threshold value or less than the threshold value, or the calculation value falls within a predetermined range. The predetermined condition may include a condition that a predetermined calculation is performed on past data and current data of an amount of change in a current value of the output value with respect to a previous value of the output value, and a calculation value obtained by the predetermined calculation is equal to or less than a threshold value or less than the threshold value, or the calculation value falls within a predetermined range. The threshold value and the predetermined range may be variable.

### ADVANTAGEOUS EFFECTS OF INVENTION

According to the present invention, it is possible to provide a technique that enables a user to use both hands while ensuring safety during work.

### BRIEF DESCRIPTION OF DRAWINGS

[FIG. 1] FIG. 1 is a block diagram schematically illustrating a configuration of a control system.
[FIG. 2] FIG. 2 is a hardware configuration diagram of a wearable instrument.
[FIG. 3] FIG. 3 is a functional block diagram of a control unit.
[FIG. 4] FIG. 4 is a flowchart illustrating a processing flow of the control system.
[FIG. 5] FIG. 5 is a hardware configuration diagram of the wearable instrument.

### DESCRIPTION OF EMBODIMENTS

### <Example Use>

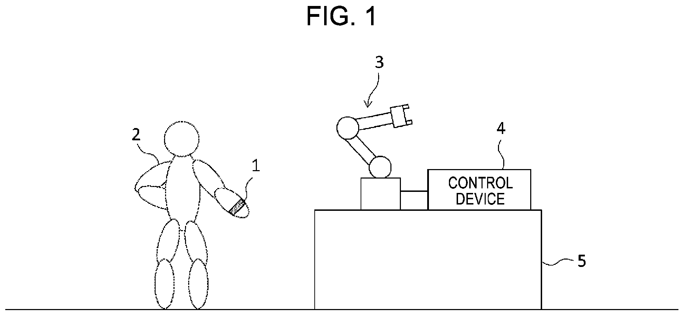

An application example of a wearable instrument according to the present invention will be described with reference to FIGS. 1 to 3. FIG. 1 is a block diagram schematically illustrating a configuration of a control system including a wearable instrument 1 according to an embodiment of the present invention. As illustrated in FIG. 1, the wearable instrument 1 can be worn by a user 2 such as a worker, and is worn by the user 2 when the user 2 performs work such as maintenance near a machine 3 such as a robot. The wearable instrument 1 can be worn on the wrist, arm, foot, head, or another body part of the user 2. In the example illustrated in FIG. 1, the machine 3 and a control device 4 that controls operation of the machine 3 are installed on a workbench 5. The wearable instrument 1 and the control device 4 communicate with each other in a wired or wireless manner. Communication between the wearable instrument 1 and the control device 4 includes transmission of information by a digital input/output (I/O) signal. The wearable instrument 1 may be configured to allow selection as to whether communication with the control device 4 is performed by a wired or wireless method. An optimum connection method for the control device 4 or an optimum connection method for each environment in which the control device 4 is installed is selected, and then communication between the wearable instrument 1 and the control device 4 is performed.

When the user 2 performs work such as maintenance near the machine 3 as illustrated in FIG. 1, it is necessary to ensure the safety of the user 2. To ensure the safety of the user 2, the user 2 puts on the wearable instrument 1 before performing the work such as maintenance. For example, in a case in which the user 2 comes too close to the machine 3, the user 2 tends to make more sudden movements (abnormal movements) than normal during the work such as maintenance to avoid contact or collision with the machine 3. This abnormal movement of the user 2 is detected and operation of the machine 3 is stopped. Thus, contact or collision between the user 2 and the machine 3 is avoided. Hereinafter, a technique of detecting an abnormal movement of the user 2 will be described.

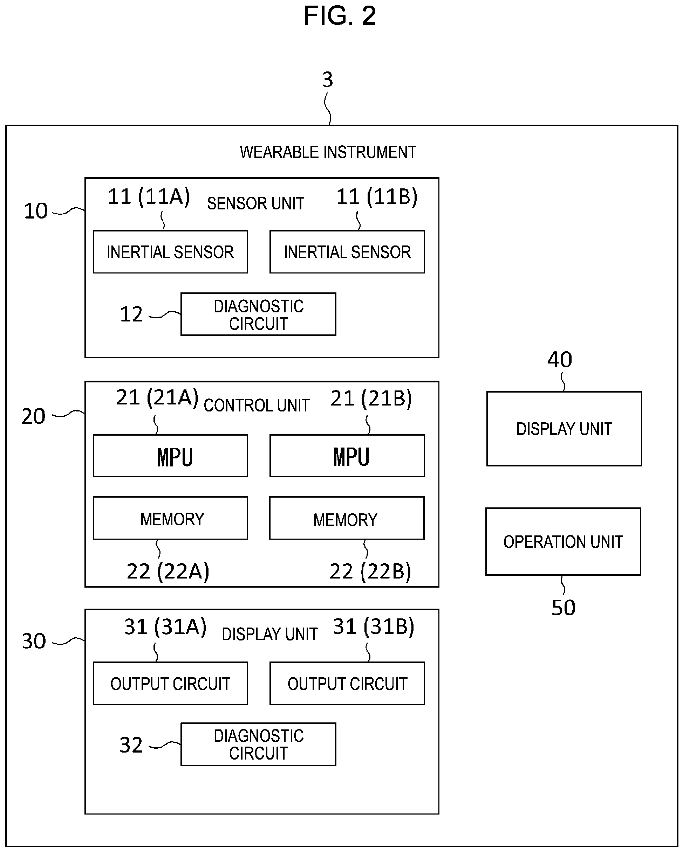

FIG. 2 is a hardware configuration diagram of the wearable instrument 1. The wearable instrument 1 includes a sensor unit 10, a control unit 20, an output unit 30, a display unit 40, and an operation unit 50. The sensor unit 10 includes a plurality of inertial sensors 11 (11A and 11B) and a diagnostic circuit 12. The sensor unit 10 processes output values of the inertial sensors 11A, 11B and transmits the output values to the control unit 20. The inertial sensors 11A, 11B may each be an accelerometer that detects acceleration in the X-axis direction, the Y-axis direction, and the Z-axis direction. The inertial sensors 11A, 11B may each be an angular velocity sensor (gyro sensor) that detects rotational angular velocities respectively about the three axes of a roll axis, a pitch axis, and a roll axis. At least one of the plurality of inertial sensors 11 may be an angular velocity sensor. At least one of the plurality of inertial sensors 11 may be an angular velocity sensor. FIG. 2 illustrates an example of a configuration in which the sensor unit 10 includes the two inertial sensors 11 (11A, 11B), but the number of the inertial sensors 11 may be increased or decreased. The sensor unit 10 may include one inertial sensor 11 or may include three or more inertial sensors 11. The diagnostic circuit 12 makes a diagnosis as to whether the inertial sensors 11A, 11B are operating normally, and displays the result of the diagnosis on the display unit 40. The diagnostic circuit 12 is an example of a diagnostic unit.

The control unit 20 controls each unit of the wearable instrument 1 and performs signal processing, arithmetic processing, and the like. The control unit 20 includes a plurality of microprocessor units (MPUs) 21 (21A and 21B) and a plurality of memories 22 (22A and 22B). The MPUs 21A, 21B may monitor each other. The memories 22A, 22B are each a random access memory (RAM), a nonvolatile storage device (read-only memory (ROM), flash memory), or the like. Functions of the control unit 20 may be provided by the MPU 21A deploying a program stored in the memory 22A and executing the program. The functions of the control unit 20 may be provided by the MPU 21B deploying a program stored in the memory 22B and executing the program. All or some of the functions provided by the control unit 20 may be configured by a circuit such as an application-specific integrated circuit (ASIC) or a field-programmable gate array (FPGA). FIG. 2 illustrates an example of a configuration in which the control unit 20 includes the two MPUs 21 (21A and 21B) and the two memories 22 (22A and 22B), but the number of the MPUs 21 and the number of the memories 22 may be increased or decreased. The control unit 20 may include one MPU 21 or may have three or more MPUs 21. The control unit 20 may include one memory 22 or may include three or more memories 22. Further, the memory 22 need not be provided in the control unit 20.

The output unit 30 includes a plurality of output circuits 31 (31A and 31B) and a diagnostic circuit 32. The output unit 30 outputs data and signals processed by the control unit 20 under the control of the control unit 20. The functions of the output unit 30 may be provided by the output circuit 31A performing various kinds of processes under the control of the control unit 20. The functions of the output unit 30 may be provided by the output circuit 31B performing various kinds of processes under the control of the control unit 20. FIG. 2 illustrates an example of a configuration in which the output unit 30 includes the two output circuits 31 (31A and 31B), but the number of the output circuit 31 may be increased or decreased. The output unit 30 may include one output circuit 31, or may include three or more output circuits 31. The diagnostic circuit 32 makes a diagnosis as to whether the output circuits 31A, 31B are operating normally, and displays the result of the diagnosis on the display unit 40.

The display unit 40 is constituted by a liquid crystal display or another display, and displays various kinds of information. Further, the display unit 40 may have a function of notifying the user 2 by using sound, a light, an LED, or the like, on the basis of an instruction from the control unit 20. The operation unit 50 accepts input of various kinds of instructions from the user 2 and transmits the input information to the control unit 20.

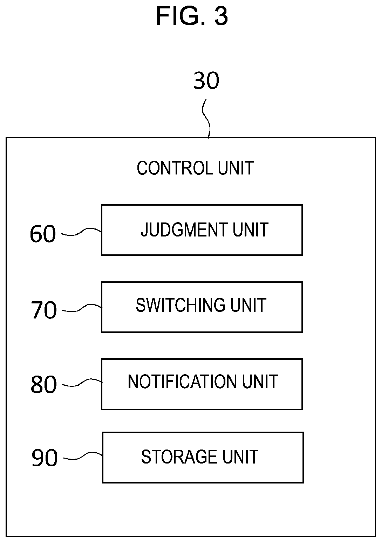

FIG. 3 is a functional block diagram of the control unit 20. The control unit 20 includes a judgment unit 60, a switching unit 70, a notification unit 80, and a storage unit 90. The judgment unit 60 judges whether the output value of the inertial sensor 11 meets a predetermined condition. The predetermined condition will be described below. In a case in which the output value of the inertial sensor 11A is transmitted to the control unit 20, the judgment unit 60 judges whether the output value of the inertial sensor 11A meets the predetermined condition. In a case in which the output value of the inertial sensor 11B is transmitted to the control unit 20, the judgment unit 60 judges whether the output value of the inertial sensor 11B meets the predetermined condition. The switching unit 70 switches a state of the output unit 30 to active or inactive. The switching unit 70 may switch the state of the output unit 30 to active or inactive on the basis of an instruction from the judgment unit 60 or the judgment result of the judgment unit 60. Further, the switching unit 70 may switch the state of the output unit 30 to active or inactive on the basis of an instruction from the user 2. The notification unit 80 issues a notification of various kinds of information. The storage unit 90 stores various kinds of data and information.

In a case in which the output value of the inertial sensor 11 meets the predetermined condition, the output unit 30 outputs an operation permission signal for instructing the control device 4 to permit operation of the machine 3. In a case in which the operation permission signal is input to the control device 4 from the output unit 30, the control device 4 controls the operation of the machine 3 on the basis of control information stored in a storage device such as a memory in the control device 4. As described above, in a case in which the operation permission signal is input to the control device 4, the control device 4 continues operation of the machine 3. For example, in a case in which the user 2 makes a sudden movement to avoid contact or collision with the machine 3, the output value of the inertial sensor 11 does not meet the predetermined condition, and the output unit 30 stops the output of the operation permission signal to the control device 4. As described above, in a case in which the output value of the inertial sensor 11 does not meet the predetermined condition, the operation permission signal is no longer input to the control device 4, and the control device 4 stops the operation of the machine 3. Accordingly, contact or collision between the user 2 and the machine 3 is avoided, and the safety of the user 2 when the user 2 performs work such as maintenance near the machine 3 is ensured. By wearing the wearable instrument 1, the user 2 does not need to hold the wearable instrument 1 in one or both hands, and the user 2 can use both hands during work such as maintenance. Thus, the user 2 can use both hands while ensuring safety during work.

The application example described above is illustrative to assist in understanding the present invention and is not intended to be construed as limiting the present invention.

### <Processing Flow>

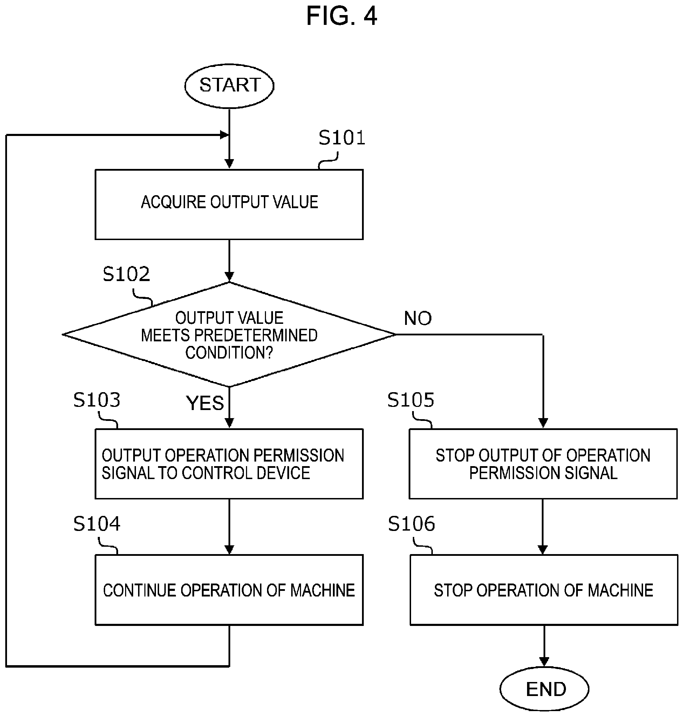

A flow of processing performed by the control system according to the embodiment will be described with reference to the flowchart of FIG. 4. In step S101, the judgment unit 60 acquires the output value of the inertial sensor 11. In step S102, the judgment unit 60 judges whether the output value of the inertial sensor 11 meets the predetermined condition.

The judgment unit 60 may judge whether the output value of the inertial sensor 11 meets the predetermined condition by executing one of a plurality of types of judgment algorithms. The plurality of types of judgment algorithms are stored in the storage unit 90. The judgment unit 60 may select one of the plurality of types of judgment algorithms stored in the storage unit 90. Accordingly, the judgment unit 60 can perform an appropriate judgment process suited to the user 2 and the work environment, and the control device 4 can appropriately stop operation of the machine 3. Hereinafter, first to third judgment processes based on the judgment algorithms will be described. The judgment unit 60 may perform the first to third judgment processes described below by machine learning using artificial intelligence (Al) technology.

The first judgment process will now be described. A judgment process performed in a case in which an accelerometer is used as the inertial sensor 11 will be described. However, the same applies to a judgment process performed in a case in which an angular velocity sensor is used as the inertial sensor 11. The judgment unit 60 may set a threshold value for the output value of the inertial sensor 11 and judge whether the output value of the inertial sensor 11 is equal to or less than the threshold value or less than the threshold value. Threshold values for the output values of each axis of XYZ of the inertial sensor 11 may be used, or a threshold value for a result of calculating the output value of the inertial sensor 11 as in √(x^2 + y^2 + z^2) may be used. A threshold value for the absolute value of the output value of the inertial sensor 11 may be used. Different threshold values may be used in accordance with whether the output value of the inertial sensor 11 is positive or negative. The threshold value may be variably set. The threshold value may be changed in accordance with the posture of the inertial sensor 11. The threshold value may be set in consideration of variation in statistical data of the output values of the inertial sensor 11.

An example of the predetermined condition in the first judgment process will now be described. The predetermined condition includes a condition that the output value of the inertial sensor 11 is equal to or less than a threshold value or less than the threshold value. The predetermined condition includes a condition that a predetermined calculation is performed on the output value of the inertial sensor 11, and a calculation value obtained by the predetermined calculation is equal to or less than a threshold value or less than the threshold value.

The second judgment process will now be described. The judgment unit 60 may judge whether an amount of change in the current value of the output value of the inertial sensor 11 with respect to the previous value of the output value of the inertial sensor 11 is equal to or less than a threshold value or less than a threshold value, or whether the amount of change falls within a predetermined range. The amount of change may be a ratio of the current value of the output value of the inertial sensor 11 to the previous value of the output value of the inertial sensor 11, or may be a value of difference between the previous value of the output value of the inertial sensor 11 and the current value of the output value of the inertial sensor 11. The threshold value and the predetermined range may be variable. The threshold value and the predetermined range may be set in consideration of variation in statistical data of the output values of the inertial sensor 11.

An example of the predetermined condition in the second judgment process will now be described. The predetermined condition includes a condition that the amount of change in the current value of the output value of the inertial sensor 11 with respect to the previous value of the output value of the inertial sensor 11 is equal to or less than a threshold value or less than a threshold value, or that the amount of change falls within a predetermined range.

The third judgment process will now be described. The judgment unit 60 may perform a predetermined calculation on past data and current data of the output value of the inertial sensor 11, and judge whether a calculation value obtained by the predetermined calculation is equal to or less than a threshold value or less than the threshold value, or whether the calculation value falls within a predetermined range. The predetermined calculation is, for example, a moving average. The past data of the output value of the inertial sensor 11 includes a plurality of output values output from the inertial sensor 11 in the past. The judgment unit 60 may perform a predetermined calculation on the past data and latest data of the amount of change in the current value of the output value of the inertial sensor 11 with respect to the previous value of the output value of the inertial sensor 11, and judge whether a calculation value obtained by the predetermined calculation is equal to or less than a threshold value or less than a threshold value, or whether the calculation value falls within a predetermined range. The past data of the amount of change includes multiple amounts of change calculated from a plurality of output values output from the inertial sensor 11 in the past. The threshold value and the predetermined range may be variable. The threshold value and the predetermined range may be set in consideration of variation in statistical data of the output values of the inertial sensor 11.

An example of the predetermined condition in the third judgment process will now be described. The predetermined condition includes a condition that a predetermined calculation is performed on the past data and the current data of the output value of the inertial sensor 11, and a calculation value obtained by the predetermined calculation is equal to or less than a threshold value or less than the threshold value, or the calculation value falls within a predetermined range. The predetermined condition includes a condition that a predetermined calculation is performed on the past data and the current data of the amount of change in the current value of the output value of the inertial sensor 11 with respect to the previous value of the output value of the inertial sensor 11, and a calculation value obtained by the predetermined calculation is equal to or less than a threshold value or less than the threshold value, or the calculation value falls within a predetermined range.

When the output value of the inertial sensor 11 meets the predetermined condition (step S102: YES), the process proceeds to step S103. In step S103, the output unit 30 outputs an operation permission signal for instructing the control device 4 to permit operation of the machine 3. In step S104, the control device 4 continues operation of the machine 3.

On the other hand, when the output value of the inertial sensor 11 does not meet the predetermined condition (step S102: NO), the process proceeds to step S105. In step S105, the output unit 30 stops output of the operation permission signal. In step S106, the control device 4 stops operation of the machine 3.

The switching of the state of the output unit 30 performed by the switching unit 70 will now be described. The switching unit 70 switches the state of the output unit 30 from active to inactive on the basis of an instruction from the user 2. In a case in which the state of the output unit 30 is inactive, the output unit 30 does not output the operation permission signal to the control device 4.

The switching unit 70 switches the state of the output unit 30 from inactive to active on the basis of an instruction from the user 2. For example, in a case in which the user 2 performs work near the machine 3, the user 2 switches the state of the output unit 30 from inactive to active. In a case in which the state of the output unit 30 is active and the output value of the inertial sensor 11 meets a predetermined condition, the output unit 30 outputs the operation permission signal to the control device 4. With the state of the output unit 30 switched from inactive to active, the operation of the machine 3 is stopped when the user 2 makes an abnormal movement. Thus, contact or collision between the user 2 and the machine 3 can be avoided.

The judgment unit 60 judges whether the user 2 is wearing the wearable instrument 1. In a case in which the output value of the inertial sensor 11 does not fluctuate for a predetermined period, the judgment unit 60 makes a judgment that the user 2 is not wearing the wearable instrument 1. When the user 2 is wearing the wearable instrument 1, the output value of the inertial sensor 11 fluctuates. In a case in which the judgment unit 60 makes a judgment that the user 2 is not wearing the wearable instrument 1, the switching unit 70 sets the state of the output unit 30 to inactive. Accordingly, in a case in which the user 2 is not wearing the wearable instrument 1, the state of the output unit 30 is set to inactive, and the output unit 30 does not output the operation permission signal to the control device 4. This prevents the machine 3 from operating while the user 2 is not wearing the wearable instrument 1. In a case in which the judgment unit 60 makes a judgment that the user 2 is not wearing the wearable instrument 1 and the state of the output unit 30 is active, the switching unit 70 may maintain the state of the output unit 30 as active. In this case, the output unit 30 does not output the operation permission signal to the control device 4. That is, in a case in which the judgment unit 60 makes a judgment that the user 2 is not wearing the wearable instrument 1, the output unit 30 does not output the operation permission signal to the control device 4.

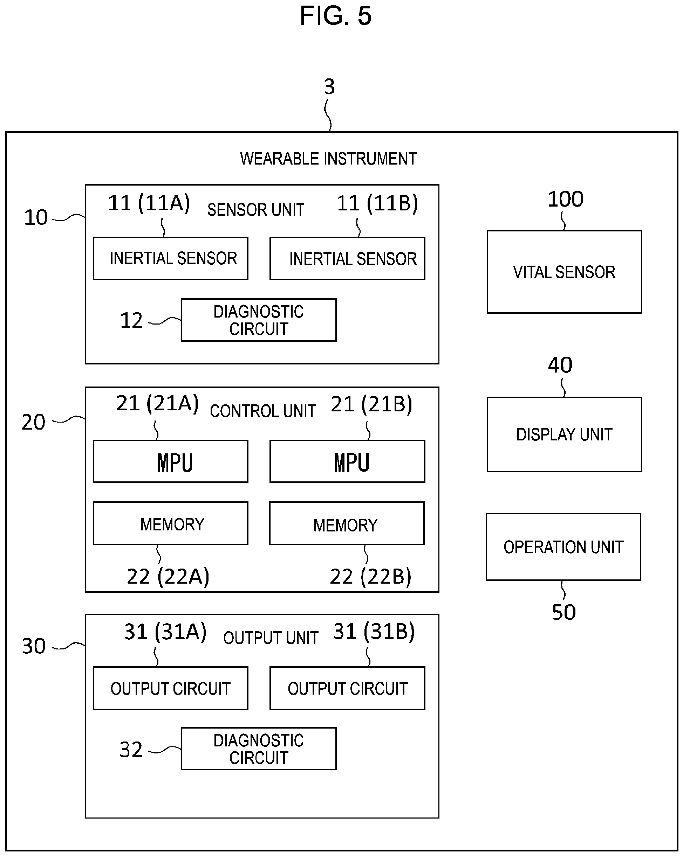

As illustrated in FIG. 5, the wearable instrument 1 may include a vital sensor 100 that acquires vital data (biological data) of the user 2. FIG. 5 is a hardware configuration diagram of the wearable instrument 1. The sensor unit 10 may include the vital sensor 100. In a case in which the vital sensor 100 does not acquire vital data, the judgment unit 60 makes a judgment that the user 2 is not wearing the wearable instrument 1. The vital data is, for example, a pulse of the user 2. Thus, the judgment unit 60 can judge whether the user 2 is wearing the wearable instrument 1 by using the vital data. In a case in which the judgment unit 60 makes a judgment that the user 2 is not wearing the wearable instrument 1, the switching unit 70 sets the state of the output unit 30 to inactive. In a case in which the judgment unit 60 makes a judgment that the user 2 is not wearing the wearable instrument 1 and the state of the output unit 30 is active, the switching unit 70 may maintain the state of the output unit 30 as active. In this case, the output unit 30 does not output the operation permission signal to the control device 4. That is, in a case in which the judgment unit 60 makes a judgment that the user 2 is not wearing the wearable instrument 1, the output unit 30 does not output the operation permission signal to the control device 4.

The notification unit 80 notifies the user of information (first information) indicating that the user 2 is wearing the wearable instrument 1 or information (second information) indicating that the user 2 is not wearing the wearable instrument 1. In a case in which the judgment unit 60 makes a judgment that the user 2 is wearing the wearable instrument 1, the notification unit 80 issues a notification of the first information. In a case in which the judgment unit 60 makes a judgment that the user 2 is not wearing the wearable instrument 1, the notification unit 80 issues a notification of the second information. For example, the notification unit 80 may display the first information or the second information on the display unit 40. Accordingly, the user 2 can recognize whether the user 2 is wearing the wearable instrument 1 or not wearing the wearable instrument 1. Further, in a case in which the user 2 is not wearing the wearable instrument 1, the user 2 can be prompted to put on the wearable instrument 1.

The diagnostic circuit 12 makes a diagnosis as to whether the inertial sensors 11A, 11B are operating normally. In a case in which the diagnostic circuit 12 makes a diagnosis that the inertial sensors 11A, 11B are operating normally, the notification unit 80 issues a notification of information indicating that the inertial sensors 11A, 11B are operating normally. In a case in which the diagnostic circuit 12 makes a diagnosis that the inertial sensors 11A, 11B are not operating normally, the notification unit 80 issues a notification of information indicating that the inertial sensors 11A, 11B are not operating normally. Accordingly, the user 2 can recognize whether the inertial sensors 11A, 11B are operating normally or the inertial sensors 11A, 11B are not operating normally. For example, in a case in which the inertial sensor 11A is not operating normally, the user 2 can repair or replace the wearable instrument 1, thereby preventing malfunction of the wearable instrument 1.

Specific examples of the process of judging whether the inertial sensors 11A, 11B are operating normally will now be described. (Example 1) The diagnostic circuit 12 periodically compares the output value of the inertial sensor 11A with the output value of the inertial sensor 11 to confirm that a change of the output value of the inertial sensor 11A and a change of the output value of the inertial sensor 11 are the same within a certain error range. In a case in which the change of the output value of the inertial sensor 11A and the change of the output value of the inertial sensor 11 are the same within a certain error range, the diagnostic circuit 12 makes a judgment that the inertial sensors 11A, 11B are operating normally. In this example, a mounting direction of the inertial sensor 11A is the same as a mounting direction of the inertial sensor 11B. Further, even in a case in which the mounting direction of the inertial sensor 11A and the mounting direction of the inertial sensor 11B are opposite to each other, the change of the output value of the inertial sensor 11A and the change of the output value of the inertial sensor 11 need only be maintained within a certain error range.

(Example 2) In a case in which the output value of the inertial sensor 11A indicates a fixed value without exceeding a certain range for a certain time period or longer, the diagnostic circuit 12 determines that the inertial sensor 11A has failed. The same applies to the inertial sensor 11B. This determination is made on the basis of the premise that, when the user 2 is wearing the wearable instrument 1, the output values of the inertial sensors 11A, 11B at least fluctuate.

(Example 3) At the start of work, the wearable instrument 1 is maintained in a predetermined posture, and the diagnostic circuit 12 confirms that the output values of the inertial sensors 11A, 11B at that time fall within an expected range. The predetermined posture includes, for example, a plurality of patterns including, for example, a display surface of the wearable instrument 1 being oriented horizontally upward or horizontally downward. In a case in which the output values of the inertial sensors 11A, 11B fall within the expected range, the diagnostic circuit 12 makes a judgment that the inertial sensors 11A, 11B are operating normally.

(Example 4) Current is supplied to the sensor unit 10, and then, the supply of the current is stopped at regular intervals. Current is again supplied to the sensor unit 10. The diagnostic circuit 12 confirms whether the output values of the inertial sensors 11A, 11B before the current is supplied and the output values of the inertial sensors 11A, 11B after the current is again supplied are equivalent values within a certain error range.

The judgment process described above may be performed by inertial sensors 11A, 11B having a self-diagnostic function.

### <Supplementary Note>

A wearable instrument (1) configured to be wearable by a user (2), the wearable instrument (1) including:
an inertial sensor (11);
a judgment unit (60) configured to judge whether an output value of the inertial sensor (11) meets a predetermined condition; and
an output unit (30) configured to output an operation permission signal for instructing a control device (4) configured to control operation of a machine (3) to permit operation of the machine (3) in a case in which the output value meets the predetermined condition.

### REFERENCE SIGNS LIST

1: Wearable instrument
2: User
3: Machine
4: Control device
10: Sensor unit
11, 11A, 11B: Inertial sensor
12: Diagnostic circuit
20: Control unit
30: Output unit
40: Display unit
50: Operation unit
60: Judgment unit
70: Switching unit
80: Notification unit
90: Storage unit

## Claims

1. A wearable instrument configured to be wearable by a user, the wearable instrument comprising:
an inertial sensor;
a judgment unit configured to judge whether an output value of the inertial sensor meets a predetermined condition; and
an output unit configured to output an operation permission signal for instructing a control device configured to control operation of a machine to permit operation of the machine in a case in which the output value meets the predetermined condition.

2. The wearable instrument according to claim 1,
wherein the judgment unit judges whether the output value meets the predetermined condition by executing one of a plurality of types of judgment algorithms.

3. The wearable instrument according to claim 1 or 2, further comprising:
a switching unit configured to switch a state of the output unit to active or inactive.

4. The wearable instrument according to claim 3,
wherein the output unit outputs the operation permission signal to the control device in a case in which the state of the output unit is active and the output value meets the predetermined condition.

5. The wearable instrument according to claim 3 or 4,
wherein the output unit does not output the operation permission signal to the control device in a case in which the state of the output unit is inactive.

6. The wearable instrument according to any one of claims 3 to 5,
wherein the judgment unit makes a judgment that the user is not wearing the wearable instrument in a case in which the output value does not fluctuate for a predetermined period, and
the switching unit sets the state of the output unit to inactive in a case in which the judgment unit makes a judgment that the user is not wearing the wearable instrument.

7. The wearable instrument according to any one of claims 3 to 5,
wherein the judgment unit makes a judgment that the user is not wearing the wearable instrument in a case in which the output value does not fluctuate for a predetermined period,
the switching unit maintains the state of the output unit as active in a case in which the judgment unit makes a judgment that the user is not wearing the wearable instrument and the state of the output unit is active, and
the output unit does not output the operation permission signal to the control device in a case in which the judgment unit makes a judgment that the user is not wearing the wearable instrument.

8. The wearable instrument according to any one of claims 3 to 6, further comprising:
a vital sensor configured to acquire vital data of the user,
wherein the judgment unit makes a judgment that the user is not wearing the wearable instrument in a case in which the vital sensor does not acquire the vital data, and
the switching unit sets the state of the output unit to inactive in a case in which the judgment unit makes a judgment that the user is not wearing the wearable instrument.

9. The wearable instrument according to any one of claims 3 to 5 and 7, further comprising:
a vital sensor configured to acquire vital data of the user,
wherein the judgment unit makes a judgment that the user is not wearing the wearable instrument in a case in which the vital sensor does not acquire the vital data,
the switching unit maintains the state of the output unit as active in a case in which the judgment unit makes a judgment that the user is not wearing the wearable instrument and the state of the output unit is active, and
the output unit does not output the operation permission signal to the control device in a case in which the judgment unit makes a judgment that the user is not wearing the wearable instrument.

10. The wearable instrument according to any one of claims 6 to 9, further comprising:
a notification unit configured to issue a notification of first information indicating that the user is wearing the wearable instrument or second information indicating that the user is not wearing the wearable instrument,
wherein the notification unit issues a notification of the first information in a case in which the judgment unit makes a judgment that the user is wearing the wearable instrument, and issues a notification of the second information in a case in which the judgment unit makes a judgment that the user is not wearing the wearable instrument.

11. The wearable instrument according to claim 10, further comprising:
a diagnostic unit configured to make a diagnosis as to whether the inertial sensor is operating normally,
wherein the notification unit issues a notification of information indicating that the inertial sensor is operating normally in a case in which the diagnostic unit makes a diagnosis that the inertial sensor is operating normally, and issues a notification of information indicating that the inertial sensor is not operating normally in a case in which the diagnostic unit makes a diagnosis that the inertial sensor is not operating normally.

12. The wearable instrument according to any one of claims 1 to 11,
wherein the inertial sensor is an accelerometer or an angular velocity sensor.

13. The wearable instrument according to any one of claims 1 to 11, further comprising:
a plurality of the inertial sensors.

14. The wearable instrument according to claim 13,
wherein at least one of the plurality of inertial sensors is an accelerometer, and at least one of the plurality of inertial sensors is an angular velocity sensor.

15. The wearable instrument according to any one of claims 1 to 14,
wherein the predetermined condition includes a condition that the output value is equal to or less than a threshold value or less than the threshold value.

16. The wearable instrument according to any one of claims 1 to 14,
wherein the predetermined condition includes a condition that a predetermined calculation is performed on the output value, and a calculation value obtained by the predetermined calculation is equal to or less than a threshold value or less than the threshold value.

17. The wearable instrument according to any one of claims 1 to 14,
wherein the predetermined condition includes a condition that an amount of change in a current value of the output value with respect to a previous value of the output value is equal to or less than a threshold value or less than the threshold value, or that the amount of change falls within a predetermined range.

18. The wearable instrument according to any one of claims 1 to 14,
wherein the predetermined condition includes a condition that a predetermined calculation is performed on past data and current data of the output value, and a calculation value obtained by the predetermined calculation is equal to or less than a threshold value or less than the threshold value, or the calculation value falls within a predetermined range.

19. The wearable instrument according to any one of claims 1 to 14,
wherein the predetermined condition includes a condition that a predetermined calculation is performed on past data and current data of an amount of change in a current value of the output value with respect to a previous value of the output value, and a calculation value obtained by the predetermined calculation is equal to or less than a threshold value or less than the threshold value, or the calculation value falls within a predetermined range.

20. The wearable instrument according to any one of claims 15 to 19,
wherein the threshold value is variable.

21. The wearable instrument according to any one of claims 17 to 19,
wherein the threshold value and the predetermined range are variable.
